(19) **Europäisches Patentamt / European Patent Office / Office européen des brevets**

(11) **EP 4 549 495 A1**

(12) **EUROPEAN PATENT APPLICATION**
published in accordance with Art. 153(4) EPC

(43) Date of publication:
**07.05.2025 Bulletin 2025/19**

(21) Application number: **23831194.8**

(22) Date of filing: **20.06.2023**

(51) International Patent Classification (IPC):
**C08J 5/04** (2006.01)    **D02G 3/16** (2006.01)
**D02G 3/36** (2006.01)

(52) Cooperative Patent Classification (CPC):
**C08J 5/04; D02G 3/16; D02G 3/36**

(86) International application number:
**PCT/JP2023/022694**

(87) International publication number:
**WO 2024/004748 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022105339**

(71) Applicant: **Toray Industries, Inc.**
**Tokyo 103-8666 (JP)**

(72) Inventors:
• **HIRATA Shin**
  **Nagoya-shi, Aichi 455-8502 (JP)**
• **YOSHIHIRO Kazuki**
  **Nagoya-shi, Aichi 455-8502 (JP)**
• **HAMAGUCHI Mitsushige**
  **Nagoya-shi, Aichi 455-8502 (JP)**
• **KOBAYASHI Makoto**
  **Nagoya-shi, Aichi 455-8502 (JP)**

(74) Representative: **Mewburn Ellis LLP**
**Aurora Building**
**Counterslip**
**Bristol BS1 6BX (GB)**

(54) **FIBER-REINFORCED RESIN MOLDING MATERIAL AND MOLDED ARTICLE**

(57) A fiber-reinforced resin molding material comprising reinforcing fibers (A) and a thermoplastic resin (B), wherein the fiber-reinforced resin molding material contains 1 to 30 parts by weight of the reinforcing fibers (A) and 70 to 99 parts by weight of the thermoplastic resin (B) with respect to 100 parts by weight in total of (A) and (B), the reinforcing fibers (A) comprise reinforcing fibers (A-1) and bundled reinforcing fibers (A-2), the reinforcing fibers (A-1) have a length of 3 to 15 mm and are aligned in the longitudinal direction of the molding material, the length of the reinforcing fibers (A-1) is the same as the length in the longitudinal direction of the molding material, and the bundled reinforcing fibers (A-2) are configured from 10 or more single fibers having a length of 0.5 to 2.9 mm. A fiber-reinforced resin molding material capable of realizing excellent flowability, mechanical properties and dimensional accuracy, and a fiber-reinforced resin molded article, can be provided.

## FIG. 8

**Description**

Technical Field of the Invention

The present invention relates to a fiber-reinforced resin molding material comprising reinforcing fibers and a thermoplastic resin and a molded article comprising reinforcing fibers and a thermoplastic resin.

Background Art of the Invention

As molding materials having a matrix of continuous reinforcing fibers and a thermoplastic resin, a wide variety of molding materials, such as thermoplastic prepreg, yarn and glass mat (GMT), are known. Such molding materials are easy to be molded by taking advantage of the properties of the thermoplastic resin, do not require storage loads like thermosetting resins, and the resulting molded articles are characterized by being provided with high toughness. In particular, molding materials processed into pellets can be applied to molding methods excellent in economic efficiency and productivity, such as injection molding and stamping molding, and are useful as industrial materials.
Patent document 1 discloses that a molded article excellent in mechanical properties and flowability can be obtained by injection molding a molding material which is prepared by combining a molding material comprising reinforcing fibers and a thermoplastic resin and a fiber-reinforced thermoplastic resin molding material obtained by pulverizing an injection molded article. Further, Patent documents 2 and 3 disclose that a molded article excellent in mechanical properties and appearance quality can be obtained by combining two types of reinforcing fibers, one having a long fiber length and the other having a short fiber length, with a thermoplastic resin and injection molding the combined material.

Prior art documents

Patent documents

Patent document 1: JP-A-2006-181776
Patent document 2: JP-A-2012-116917
Patent document 3: JP-A-HEI 4-175108

Summary of the Invention

Problems to be solved by the Invention

However, in recent years, as molded articles have become smaller, thinner, and more complicated, molding materials are required to have higher moldability and are required to satisfy a high-degree balance of excellent flowability, mechanical properties, and dimensional accuracy of molded articles that can be adapted to small, thin, and complicated molded articles. Conventionally, thermoplastic resin molding materials comprising reinforcing fibers have a problem of poor flowability as the length of the reinforcing fibers increases. On the other hand, when the length of the reinforcing fibers is short, the flowability is excellent, but there is a problem that the mechanical properties and dimensional accuracy of the molded article decrease because the reinforcing fibers may be broken during injection molding, making it difficult to achieve both. Therefore, in applications where small, thin, and complicated molded articles are required, it is necessary to contain long reinforcing fibers with excellent mechanical properties and have excellent flowability.
Accordingly, in view of the above-described problems and necessities, an object of the present invention is to provide a fiber-reinforced resin molding material and a fiber-reinforced resin molded article that are capable of achieving excellent flowability, mechanical properties, and dimensional accuracy at the same time.

Means for solving the Problems

To achieve the above-described object, the present invention has the following configuration.

(1) A fiber-reinforced resin molding material comprising reinforcing fibers (A) and a thermoplastic resin (B), wherein the fiber-reinforced resin molding material contains 1 to 30 parts by weight of the reinforcing fibers (A) and 70 to 99 parts by weight of the thermoplastic resin (B) with respect to 100 parts by weight in total of (A) and (B), the reinforcing fibers (A) comprise reinforcing fibers (A-1) and bundled reinforcing fibers (A-2), the reinforcing fibers (A-1) have a length of 3 to 15 mm and are aligned in the longitudinal direction of the molding material, the length of the reinforcing fibers (A-1) is the same as a length in the longitudinal direction of the molding material, and the bundled reinforcing fibers (A-2) are configured from 10 or more single fibers having a length of 0.5 to 2.9 mm.

(2) The fiber-reinforced resin molding material according to (1), wherein the fiber-reinforced resin molding material comprises a fiber-reinforced resin molding material (X) and a fiber-reinforced resin molding material (Y), the fiber-reinforced resin molding material (X) contains the reinforcing fibers (A-1) and a thermoplastic resin (B-1), the reinforcing fibers (A-1) are aligned in the longitudinal direction of the fiber-reinforced resin molding material (X), and the fiber-reinforced resin molding material (Y) comprises the bundled reinforcing fiber (A-2) and a thermoplastic resin (B-2).

(3) The fiber-reinforced resin molding material according to (1) or (2), wherein the fiber-reinforced resin molding material has a core-sheath structure, the core structure of the core-sheath structure contains the reinforcing fibers (A-1), and the reinforcing fibers (A-1) are aligned in the longitudinal direction of the molding material, the sheath structure of the core-sheath structure is a fiber-reinforced resin composition (C) containing the bundled reinforcing fibers (A-2) and the thermoplastic resin (B), the sheath structure coats the core structure.

(4) The fiber-reinforced resin molding material according to any of (1) to (3), wherein the reinforcing fibers (A-1) and the bundled reinforcing fibers (A-2) are both carbon fibers.

(5) The fiber-reinforced resin molding material according to any of (1) to (4), wherein content of the reinforcing fibers (A-1) is 50 to 99 parts by weight and content of the bundled reinforcing fiber (A-2) is 1 to 50 parts by weight with respect to 100 parts by weight of the reinforcing fibers (A).

(6) The fiber-reinforced resin molding material according to any of (1) to (5), wherein a resin component (D) is attached to a fiber bundle surface of the bundled reinforcing fibers (A-2).

(7) The fiber-reinforced resin molding material according to (6), wherein the resin component (D) is a thermosetting resin and is contained at an amount of 7 parts by weight or more with respect to 100 parts by weight of the bundled reinforcing fibers (A-2).

(8) The fiber-reinforced resin molding material according to any of (1) to (7), wherein the thermoplastic resin (B) comprises at least one selected from the group consisting of polyamide resin, polycarbonate resin, polyphenylene sulfide resin, and polypropylene resin.

(9) A fiber-reinforced resin molded article comprising reinforcing fibers (A') and a thermoplastic resin (B), wherein the fiber-reinforced resin molded article contains 1 to 30 parts by weight of the reinforcing fiber (A') and 70 to 99 parts by weight of the thermoplastic resin (B) with respect to 100 parts by weight in total of (A') and (B), a weight average fiber length Lw(A') of the reinforcing fibers (A') is 0.1 to 2.9 mm, and the reinforcing fibers (A') contain bundled reinforcing fibers (A-2') configured from 10 or more single fibers having a length of 0.5 to 2.9 mm.

(10) The fiber-reinforced resin molded article according to (9), wherein a ratio of reinforcing fibers having a fiber length of 0.3 to 1.0 mm in the reinforcing fibers (A') is 40% or more.

(11) The fiber-reinforced resin molded article according to (9) or (10), wherein the bundled reinforcing fibers (A-2') are contained at an amount of 1 to 50 parts by weight with respect to 100 parts by weight of the reinforcing fibers (A').

(12) The fiber-reinforced resin molded article according to any of (9) to (11), wherein the reinforcing fibers (A') are carbon fibers.

(13) The fiber-reinforced resin molded article according to any of (9) to (12), wherein a resin component (D) is attached to a fiber bundle surface of the bundled reinforcing fibers (A-2').

(14) The fiber-reinforced resin molded article according to (13), wherein the resin component (D) is a thermosetting resin and is contained at an amount of 7 parts by weight or more with respect to 100 parts by weight of the bundled reinforcing fibers (A-2').

(15) The fiber-reinforced resin molded article according to any of (9) to (14), wherein the thermoplastic resin (B) comprises at least one selected from the group consisting of polyamide resin, polycarbonate resin, polyphenylene sulfide resin, and polypropylene resin.

Effect according to the Invention

According to the present invention, it is possible to obtain a molding material which can achieve excellent flowability, mechanical properties and dimensional accuracy. Since the molding material of the present invention has excellent flowability during molding and can easily produce molded articles excellent in mechanical properties and dimensional accuracy, it can be applied not only to molding methods such as injection molding, transfer molding, blow molding and insert molding, but also to a wide range of molding methods such as plunger molding, press molding and stamping molding.

As the molded articles obtained by molding the molding material of the present invention, exemplified are automobile parts such as thrust washers, oil filters, seals, bearings, gears, cylinder head covers, bearing retainers, intake manifolds and pedals; semiconductor and liquid crystal manufacturing equipment parts such as silicon wafer carriers, IC chip trays, electrolytic capacitor trays and insulating films; industrial machinery parts such as compressor parts such as pumps, valves and seals, and aircraft cabin interior parts; medical equipment parts such as sterilization equipment, columns and piping; and food and beverage manufacturing equipment parts. Further, by using the molding material of the present invention, it is relatively easy to obtain thin molded articles with a wall thickness of 0.5 to 2 mm. As articles required with such a thin-wall molding, for example, exemplified are electrical and electronic equipment parts such as a keyboard support which is a member that supports a keyboard inside a personal computer. In such electrical and electronic equipment parts, when conductive carbon fibers are used as reinforcing fibers, electromagnetic wave shielding properties are imparted, which is preferred.

Brief explanation of the drawings

[Fig. 1] Fig. 1 is a schematic diagram showing an example of a shape of a cross section in an axial direction of a molding material according to an embodiment of the present invention.

[Fig. 2] Fig. 2 is a schematic diagram showing an example of a shape of a cross section in an axial direction of a molding material according to another embodiment of the present invention.

[Fig. 3] Fig. 3 is a schematic diagram showing an example of a shape of a cross section in a direction perpendicular to an axis of a molding material according to a further embodiment of the present invention.

[Fig. 4] Fig. 4 is a schematic diagram showing an example of a shape of a cross section in a direction perpendicular to an axis of a molding material according to a further embodiment of the present invention.

[Fig. 5] Fig. 5 is a schematic diagram showing an example of a shape of a cross section in a direction perpendicular to an axis of a molding material according to a further embodiment of the present invention.

[Fig. 6] Fig. 6 is a schematic perspective view showing an example of a shape of a molding material according to a further embodiment of the present invention.

[Fig. 7] Fig. 7 is a schematic perspective view showing an example of a shape of a molding material according to a further embodiment of the present invention.

[Fig. 8] Fig. 8 is a schematic perspective view showing an example of a shape of a molding material according to a further embodiment of the present invention.

Embodiments for carrying out the Invention

Hereinafter, the present invention will be explained in detail together with embodiments.

<Molding material>

The molding material of the present invention contains reinforcing fibers (A) and a thermoplastic resin (B). By containing the reinforcing fibers (A), the fiber length of the reinforcing fibers can be kept long, and excellent mechanical properties can be exhibited.

[Reinforcing fibers (A)]

The reinforcing fibers (A) in the present invention will be explained.

The kind of reinforcing fibers (A) in the present invention is not particularly restricted, and for example, carbon fibers, glass fibers, aramid fibers, alumina fibers, silicon carbide fibers, boron fibers, metal fibers, natural fibers, mineral fibers, etc. can be used, and these may be used alone or in combination of two or more. Among them, from the viewpoint of obtaining a molded article that is lightweight, high-strength and high-elastic modulus, carbon fibers of PAN (polyacrylonitrile)-based, pitch-based, rayon-based, and the like are preferably used. In particular, from the viewpoint of high strength, reinforcing fibers having a tensile strength of 4,000 MPa or more are preferred, more preferably 5,000 MPa or more. From the viewpoint of high elastic modulus, reinforcing fibers having a tensile elastic modulus of 200 GPa or more are preferred, more preferably 400 GPa or more. In particular, reinforcing fibers having an elastic modulus of 400 GPa or more, which are difficult to maintain a long fiber length, are preferred because they can better exhibit the effects of the molding material of the present invention described later.

Further, from the viewpoint of improving the economic efficiency of a molded article to be obtained, glass fibers can be preferably used, and in particular, it is preferred to use carbon fibers and glass fibers in combination from the viewpoint of the balance between mechanical properties and economic efficiency. Further, from the viewpoint of improving the impact absorption and formability of a molded article to be obtained, aramid fibers can be preferably used, and in particular, it is preferred to use carbon fibers and aramid fibers in combination from the viewpoint of the balance between mechanical properties and impact absorption. Furthermore, from the viewpoint of improving the electrical conductivity of a molded article to be obtained, reinforcing fibers coated with a metal such as nickel, copper or ytterbium, or pitch-based carbon fibers, can also be used.

It is preferred that a sizing agent is attached to the reinforcing fibers (A). By attaching a sizing agent to the reinforcing fibers (A), the handling property during transfer of the reinforcing fibers and the processability at the manufacturing process of the molding material can be improved. Although there is no particular limitation on the kind of the sizing agent, sizing agents such as epoxy resins, urethane resins, acrylic resins and various thermoplastic resins can be used alone or in combination of two or more kinds.

The amount of reinforcing fibers (A) is preferably 1 to 30 parts by weight with respect to 100 parts by weight of the molding material, more preferably 2 to 25 parts by weight, and further preferably 5 to 20 parts by weight. If the amount of the reinforcing fibers (A) is less than 1 part by weight, the mechanical properties and dimensional accuracy of the resulting molded article may be insufficient, and if it exceeds 30 parts by weight, the flowability may decrease.

The reinforcing fibers (A) in the present invention includes reinforcing fibers (A-1) and bundled reinforcing fibers (A-2). The length of the reinforcing fibers (A-1) is preferably 3 to 15 mm, more preferably 5 to 10 mm. The reinforcing fibers (A-1) are preferably in a state in which single fibers are arranged in one direction. As preferred forms, unidirectional fiber bundles, bidirectional fiber bundles, multidirectional fiber bundles are exemplified, but from the viewpoint of productivity in the process of producing a molding material, unidirectional fiber bundles can be more preferably used. The more single fibers in the reinforcing fibers (A), the more advantageous they are for economic efficiency, and therefore, in case where the molding material is formed into, for example, a pellet, the number of single fibers in one pellet is preferably 10,000 or more. On the other hand, since the greater the number of single fibers in the reinforcing fibers, the more unfavorable the impregnation property of a matrix resin greater tends to become, from the viewpoint of achieving both economic efficiency and impregnation property, the number of the fibers is more preferably 15,000 or more and 100,000 or less, and particularly preferably 20,000 or more and 50,000 or less.

Further, it is preferred that in the molding material, the reinforcing fibers (A-1) are aligned in the longitudinal direction of the molding material, and the length of the reinforcing fibers (A-1) is substantially the same as the length of the molding material. Here, being aligned in the longitudinal direction of the molding material indicates a state in that the axial line of the long axis of the reinforcing fibers (A-1) and the axial line of the long axis of the molding material are directed in the same direction, and the angular deviation between the axes is preferably 20° or less, more preferably 10° or less, and further preferably 5° or less. In addition, substantially the same length means that, for example, in a pellet-shaped molding material, the reinforcing fibers (A-1) are not cut in the middle of the inside of the pellet, and the reinforcing fiber (A-1) significantly shorter than the full length of the pellet is not substantially contained. Where, the full length of the pellet means a length in the orientation direction of the reinforcing fibers (A-1) in the pellet. By the condition where the reinforcing fibers (A-1) have substantially the same length as the molding material, the reinforcing fiber length in the molded article can be increased, and excellent mechanical properties and dimensional accuracy can be obtained.

The length of the bundled reinforcing fibers (A-2) is preferably 0.5 to 2.9 mm, more preferably 0.6 to 2.7 mm, and further preferably 0.7 to 2.5 mm. If the length of the bundled reinforcing fibers (A-2) is less than 0.5 mm, the mechanical properties and dimensional accuracy of the molded article are inferior, which is not preferred. On the other hand, if the length of the bundled reinforcing fibers (A-2) is longer than 2.9 mm, the flowability is inferior, which is not preferred. Further, each of the bundled reinforcing fibers (A-2) is composed of 10 or more single reinforcing fibers. The number of single reinforcing fibers forming each of the bundled reinforcing fibers (A-2) is preferably 10 or more, more preferably 15 or more, and further preferably 20 or more. If the number of single fibers in the bundled reinforcing fibers (A-2) is less than 10, since fiber breakage occurs during injection molding, which is not preferred because the mechanical properties and dimensional accuracy of the molded article are inferior. Although there is no particular upper limit for the number of single fibers, it is preferably 100,000 or less, and more preferably 80,000 or less. If the number of single fibers exceeds 100,000, the appearance quality of the surface of the molded article is deteriorated, which is not preferred.

The form of the bundled reinforcing fibers (A-2) used during melt kneading is not restricted as long as it can be charged into a melt kneading device, and chopped strands, crushed fibers, continuous long fibers, etc. that have been cut in advance, can be exemplified, and chopped strands are preferably used from the viewpoint of productivity. The chopped strands may be recycled chopped strands obtained by crushing a fiber-reinforced resin molded product and pyrolyzing the matrix resin. As methods for obtaining the recycled chopped strands, a known manufacturing method can be employed. For example, waste pieces obtained by crushing and classifying a fiber-reinforced resin molded product are uniformly spread on a metal bat and placed in an electric muffle furnace, and heat treatment is performed while maintaining the treatment temperature at a predetermined temperature while introducing nitrogen gas into the furnace. Thereafter, similarly, heat treatment is performed while maintaining the treatment temperature at a predetermined temperature while introducing air into the furnace, thereby obtaining recycled chopped strands.

Furthermore, the heat treatment temperature in an air atmosphere in the heat treatment step is preferably 300°C to 700°C. If the heat treatment temperature in an air atmosphere exceeds 700°C, the resin component (D) described later will completely disappear, becoming a state leaving only the reinforcing fibers, and the convergence of the reinforcing fiber bundles (bundled reinforcing fibers (A-2)) will disappear, and the bundled reinforcing fibers will not remain, so that fiber breakage will increase and the mechanical properties and dimensional accuracy will be deteriorated, which is not preferred. Conversely, if the heat treatment temperature is less than 300°C, the resin component (D) will increase, which will cause a decrease in toughness as a matrix resin, and the mechanical properties will be deteriorated, which is not preferred.

Further, it is preferred to carry out the final heat treatment in an air atmosphere. When the first heat treatment is carried out in a nitrogen gas atmosphere at 700°C for 2 hours, the resin component (D) becomes 7 parts by weight or more. In an inactive nitrogen gas atmosphere, even if the heat treatment is carried out for more than 2 hours, the resin component (D) does not change. By carrying out the final heat treatment in an active air atmosphere, recycled chopped strands having the desired resin component (D) can be obtained.

In the present invention, crushed fiber-reinforced resin molded products can be used, but when crushing, it is preferred to crush the products to a maximum length of 20 mm or less after crushing, taking into consideration of the subsequent processability. As a crusher for such fiber-reinforced resin molded products, a shear type crusher, an impact type crusher, a cutting type crusher or a compression type crusher can be applied. There is no problem with using any of the crushers, and they can be combined. Further, as a classifier for the crushed articles, a vibration sieve, a gyroscopic sieve or a centrifugal sieve can be applied. It is preferred to use a crusher depending upon the crushing capacity of the crusher and the form of the crushed articles.

The kind of reinforcing fibers (A-1) and bundled reinforcing fibers (A-2) used in the present invention is not particularly limited, but any filler having a fibrous shape can be used. Concretely, exemplified are glass fibers, PAN-based or pitch-based carbon fibers, stainless steel fibers, metal fibers such as aluminum fibers or brass fibers, organic fibers such as aromatic polyamide fibers, gypsum fibers, ceramic fibers, asbestos fibers, zirconia fibers, alumina fibers, silica fibers, titanium oxide fibers, silicon carbide fibers, rock wools, potassium titanate whiskers, silicon nitride whiskers, fibrous or whisker-like fillers such as wollastonite or alumina silicate, non-metallic fibers (glass fibers, aramid fibers, polyester fibers, carbon fibers, etc.) coated with metal (nickel, copper, cobalt, silver, aluminum, iron, and alloys thereof, etc.), etc. Among the short fiber fillers, PAN-based or pitch-based carbon fibers are exemplified as a preferred example, and a particularly preferred example is PAN-based carbon fibers.

With respect to the contents of the reinforcing fibers (A-1) and the bundled reinforcing fibers (A-2) in the present invention, it is preferred that the reinforcing fibers (A-1) are contained at 50 to 99 parts by weight and the bundled reinforcing fibers (A-2) are contained at 1 to 50 parts by weight with respect to 100 parts by weight of the reinforcing fibers (A). If the content of the reinforcing fibers (A-1) is less than 50 parts by weight, the mechanical properties and dimensional stability of the molded article are inferior, which is not preferred. Further, if the content of the reinforcing fibers (A-1) exceeds 99 parts by weight, the flowability during injection molding is inferior, which is not preferred. The content of the reinforcing fibers (A-1) is more preferably 60 to 95 parts by weight, and further preferably 70 to 90 parts by weight. If the content of the bundled reinforcing fibers (A-2) is less than 1 part by weight, the mechanical properties and dimensional accuracy of the molded article are inferior, which is not preferred. If the content of the bundled reinforcing fibers (A-2) exceeds 50 parts by weight, the mechanical properties are inferior, which is not preferred.

[Thermoplastic resin (B)]

The molding material of the present invention contains 70 to 99 parts by weight of the thermoplastic resin (B) with respect to 100 parts by weight of the total of the reinforcing fibers (A) and the thermoplastic resin (B).

In the present invention, the thermoplastic resin (B) is preferably one having a molding temperature (melting temperature) of 200 to 450°C, and examples thereof include polyolefin resins, polystyrene resins, polyamide resins, halogenated vinyl resins, polyacetal resins, saturated polyester resins, polycarbonate resins, polyaryl sulfone resins, polyaryl ketone resins, polyphenylene ether resins, polyphenylene sulfide resins, polyaryl ether ketone resins, polyether sulfone resins, polyphenylene sulfide sulfone resins, polyarylate resins, polyamide resins, etc., and all of which correspond to electrical insulators. Two or more of these can also be used.

Among the above-described thermoplastic resins (B), polyolefin resins, polyamide resins, polycarbonate resins and polyarylene sulfide resins are more preferable because they are lightweight and have an excellent balance between mechanical properties and moldability.

The polyolefin resin referred to here includes both unmodified and modified polyolefins. For example, an unmodified polypropylene resin is concretely a homopolymer of propylene or a copolymer of propylene and at least one $\alpha$-olefin, conjugated diene, non-conjugated diene, or the like. As $\alpha$-olefins, for example, exemplified are $\alpha$-olefins having 2 to 12 carbon atoms excluding propylene, such as ethylene, 1-butene, 3-methyl-1-butene, 4-methyl-1-pentene, 3-methyl-1-pentene, 4-methyl-1-hexene, 4,4 dimethyl-1-hexene, 1-nonene, 1-octene, 1-heptene, 1-hexene, 1-decene, 1-undecene, and 1-dodecene. As conjugated dienes and non-conjugated dienes, for example, exemplified are butadiene, ethylidene norbornene, dicyclopentadiene, 1,5-hexadiene and the like. Two or more of these may be used. As the skeletal structure of the unmodified polypropylene resin, can be exemplified a propylene homopolymer, a random or block copolymer of propylene and the aforementioned other monomers, a random or block copolymer of propylene and other thermoplastic monomers, or the like. For example, polypropylene, ethylene-propylene copolymer, propylene-1-butene copolymer, ethylene-propylene-1-butene copolymer, etc. can be exemplified as preferable examples. A propylene homopolymer is preferred from the viewpoint of further improving the rigidity of the molded article, and a random or block copolymer of propylene and the aforementioned other monomer is preferred from the viewpoint of further improving the impact strength of the molded article.

Further, as the modified polypropylene resin, an acid-modified polypropylene resin is preferred, and a polypropylene resin having a group of a carboxylic acid and/or a salt thereof bonded to the polymer chain is more preferred. The acid-modified polypropylene resin can be obtained by various methods, for example, by graft polymerization of a monomer having a neutralized or non-neutralized carboxylic acid group and/or a monomer having a saponified or non-saponified carboxylic acid ester group onto a polypropylene resin.

Here, as the monomer having a neutralized or non-neutralized carboxylic acid group, or the monomer having a saponified or non-saponified carboxylic acid ester group, for example, exemplified are ethylene-based unsaturated carboxylic acids, their anhydrides thereof, esters thereof, etc. Furthermore, compounds having an unsaturated vinyl group other than olefins can also be exemplified.

As the ethylene-based unsaturated carboxylic acids, exemplified are (meth)acrylic acid, maleic acid, fumaric acid, tetrahydro phthalic acid, itaconic acid, citraconic acid, crotonic acid, isocrotonic acid, etc. and as the anhydrides thereof, can be exemplified Nadic acid TM (endo-cis-bicyclo[2,2,1]hept-5-ene-2,3-dicarboxylic acid), maleic anhydride, citraconic anhydride, etc.

As the esters of ethylene-based unsaturated carboxylic acids, exemplified are (meth)acrylic acid esters such as methyl (meth)acrylate, ethyl (meth)acrylate, propyl (meth)acrylate, n-butyl (meth)acrylate, iso-butyl (meth)acrylate, tert-butyl (meth)acrylate, n-amyl (meth)acrylate, iso-amyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobornyl (meth)acrylate, dicyclopentanyl (meth)acrylate, dicyclopentenyl (meth)acrylate, dimethyl aminoethyl (meth)acrylate, and diethyl aminoethyl (meth)acrylate; hydroxyl group-containing (meth)acrylic acid esters such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate; epoxy group-containing (meth)acrylic acid esters such as glycidyl (meth)acrylate, and methyl glycidyl (meth)acrylate; amino alkyl (meth)acrylates such as N,N-dimethyl aminoethyl (meth)acrylate, N,N-diethyl aminoethyl (meth)acrylate, N,N-dimethyl aminopropyl (meth)acrylate, N,N-dipropyl aminoethyl (meth)acrylate, N,N-dibutyl aminoethyl (meth)acrylate, N,N-dihydroxy ethyl aminoethyl (meth)acrylate; or the like.

As the monomers having an unsaturated vinyl group other than olefins, exemplified are isocyanate group-containing vinyls such as vinyl isocyanate and isopropenyl isocyanate; aromatic vinyls such as styrene, $\alpha$-methyl styrene, vinyl toluene and t-butyl styrene; amide group-containing vinyls such as acrylamide, methacrylamide, N-methylal methacrylamide, N-methylal acrylamide, diacetone acrylamide and maleic acid amide; vinyl esters such as vinyl acetate and vinyl propionate; unsaturated sulfonic acids such as styrene sulfonic acid, sodium styrene sulfonate and 2-acrylamido-2-methylpropane sulfonic acid; unsaturated phosphoric acids such as mono(2-methacryloyloxyethyl) acid phosphate and mono(2-acryloyloxyethyl) acid phosphate; or the like.

Two or more of these can also be used. Further, among these, ethylene-based unsaturated carboxylic acid anhydrides are preferred, and maleic anhydride is more preferred.

Here, in order to improve the flexural strength and tensile strength of the molded article, it is preferred to use unmodified and modified polypropylene resins together, and from the viewpoint of the balance between flame retardancy and mechanical properties in particular, it is preferred to use the unmodified and modified polypropylene resins at a weight ratio of 95/5 to 75/25, more preferably 95/5 to 80/20, and further preferably 90/10 to 80/20.

Further, polyamide resins are resins whose main raw materials are amino acids, lactams, or diamines and dicarboxylic acids. As the typical examples of the main raw materials, exemplified are amino acids such as 6-aminocaproic acid, 11-aminoundecanoic acid, 12-aminododecanoic acid, and para-aminomethyl benzoic acid; lactams such as $\varepsilon$-caprolactam and $\omega$-Lauro lactam; aliphatic diamines such as tetramethylene diamine, hexamethylene diamine, 2-methylpentamethylene diamine, nonamethylene diamine, undecamethylene diamine, dodecamethylene diamine, 2,2,4-/2,4,4-trimethylhexamethylene diamine, and 5-methylnonamethylene diamine; aromatic diamines such as meta-xylylene diamine and para-xylylene diamine; alicyclic diamines such as 1,3-bis(aminomethyl)cyclohexane, 1,4-bis(aminomethyl)cyclohexane, 1-amino-3-aminomethyl-3,5,5-trimethyl cyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethyl piperazine; aliphatic dicarboxylic acids such as adipic acid, suberic acid, azelaic acid, sebacic acid, and dodecanedioic acid; aromatic dicarboxylic acids such as terephthalic acid, isophthalic acid, 2-chloroterephthalic acid, 2-methylterephthalic acid, 5-methylisophthalic acid, 5-sodium sulfoisophthalic acid, hexahydro terephthalic acid, and hexahydro isophthalic acid; alicyclic dicarboxylic acids such as 1,4-cyclohexane dicarboxylic acid, 1,3-cyclohexane dicarboxylic acid, and 1,2-cyclohexane dicarboxylic acid; or the like. Two or more of these may be used.

In the present invention, polyamide resins having a melting point of 200°C or higher are particularly useful because of their excellent heat resistance and strength. As concrete examples thereof, exemplified are polycaproamide (nylon 6), polyhexamethylene adipamide (nylon 66), polycaproamide/polyhexamethylene adipamide copolymer (nylon 6/66), polytetramethylene adipamide (nylon 46), polyhexamethylene sebacamide (nylon 610), polyhexamethylene dodecamide (nylon 612), polydecamethylene decamide (nylon 1010), polydecamethylene dodecamide (nylon 1012), polydodecamethylene dodecamide (nylon 1212), polyundecane amide (nylon 11), polydodecane amide (nylon 12), polyhexamethylene terephthalamide/polycaproamide copolymer (nylon 6T/6), polyhexamethylene adipamide/polyhexamethylene terephthalamide copolymer (nylon 66/6T), polyhexamethylene adipamide/polyhexamethylene isophthalamide copolymer (nylon 66/6I), polyhexamethylene adipamide/polyhexamethylene terephthalamide/polyhexamethylene isophthalamide copolymer (nylon 66/6T/6I), polyhexamethylene terephthalamide/polyhexamethylene isophthalamide copolymer (nylon 6T/6I), polyhexamethylene terephthalamide/polydodecane amide copolymer (nylon 6T/12), polyhexamethylene terephthalamide/poly(2-methylpentamethylene) terephthalamide copolymer (nylon 6T/M5T), polyxylylene adipamide (nylon XD6), polynonamethylene terephthalamide (nylon 9T), copolymers thereof, etc. Two or more of these may be used. Among these, nylon 6, nylon 66, nylon 610, nylon 11, nylon 12 and nylon 9T are more preferable.

There is no particular restriction on the degree of polymerization of these polyamide resins, and the relative viscosity of a solution prepared by dissolving 0.25g of the polyamide resin in 25 ml of 98% concentrated sulfuric acid, determined at 25° C, is preferably in the range of 1.5 to 5.0, and more preferably in the range of 2.0 to 3.5.

Further, the polycarbonate resin is obtained by reacting a dihydric phenol with a carbonate precursor. It may be a copolymer obtained by using two or more dihydric phenols or two or more carbonate precursors. As examples of the reaction method, can be exemplified an interfacial polymerization method, a melt transesterification method, a solid-phase transesterification method of a carbonate prepolymer, a ring-opening polymerization method of a cyclic carbonate compound, and the like. Such polycarbonate resins themselves are known, and for example, the polycarbonate resins described in JP-A-2002-129027 can be used.

As the dihydric phenols, for example, exemplified are 1,1-bis(4-hydroxyphenyl)-3,3,5-trimethylcyclohexane, bis(4-hydroxyphenyl)alkanes (such as bisphenol A), 2,2-bis {(4-hydroxy-3-methyl)phenyl} propane, $\alpha,\alpha'$-bis(4-hydroxyphenyl)-m-diisopropyl benzene, 9,9-bis(4-hydroxy-3-methylphenyl)fluorene, etc. Two or more of these may be used. Among these, bisphenol A is preferred, and a polycarbonate resin with excellent impact resistance can be obtained. On the other hand, copolymers obtained by using bisphenol A and other dihydric phenols are excellent in terms of high thermal resistance or low water absorption.

As the carbonate precursor, for example, a carbonyl halide, a carbonic acid diester, a haloformate, or the like is used, and concretely, exemplified are phosgene, diphenyl carbonate, a dihaloformate of a dihydric phenol, or the like.

In producing a polycarbonate resin from the above-described dihydric phenol and carbonate precursor, a catalyst, a terminal terminator, an antioxidant for preventing oxidation of the dihydric phenol and the like may be used as needed.

Further, the polycarbonate resin in the present invention includes a branched polycarbonate resin copolymerized with a trifunctional or higher polyfunctional aromatic compound, a polyester carbonate resin copolymerized with an aromatic or aliphatic (including alicyclic) bifunctional carboxylic acid, a copolymerized polycarbonate resin copolymerized with a bifunctional alcohol (including alicyclic), and a polyester carbonate resin copolymerized with both of such a bifunctional carboxylic acid and a bifunctional alcohol. These polycarbonate resins are also known. Further, two or more of these polycarbonate resins may be used.

The molecular weight of the polycarbonate resin is not specified, but the viscosity average molecular weight is preferably 10,000 to 50,000. If the viscosity average molecular weight is 10,000 or more, the strength of the molded article can be further improved. More preferably, it is 15,000 or more, and further preferably, it is 18,000 or more. On the other hand, if the viscosity average molecular weight is 50,000 or less, the molding processability is improved. More preferably, it is 40,000 or less, and further preferably, it is 30,000 or less. In case where two or more kinds of polycarbonate resins are used, it is preferred that the viscosity average molecular weight of at least one of them is within the above-described range. In this case, it is preferred to use a polycarbonate resin having a viscosity average molecular weight of more than 50,000, preferably more than 80,000, as the other polycarbonate resin. Such polycarbonate resins have high entropy elasticity, which is advantageous when used in conjunction with gas-assisted molding, etc., and in addition, exhibit properties derived from the high entropy elasticity (anti-drip properties, drawdown properties, and properties that improve melting properties such as jetting improvement).

The viscosity average molecular weight (M) of the polycarbonate resin is determined by inserting the specific viscosity ($\eta$sp) determined at 20°C from a solution in which 0.7g of the polycarbonate resin is dissolved in 100 ml of methylene chloride into the following equation:

$$\eta sp/c = [\eta] + 0.45 \times [\eta]^2 c$$

(where [η] is an intrinsic viscosity)

$$[\eta]=1.23\times 10^{-4} M^{0.83}$$

$$c=0.7$$

In the present invention, as the polyarylene sulfide resin, for example, exemplified are polyphenylene sulfide (PPS) resin, polyphenylene sulfide sulfone resin, polyphenylene sulfide ketone resin, random or block copolymers thereof, etc. Two or more of these may be used. Among them, polyphenylene sulfide resin is particularly preferably used.

The polyarylene sulfide resin can be produced by an arbitrary method, such as the method of obtaining a polymer having a relatively small molecular weight described in JP-B-SHO 45-3368, or the method of obtaining a polymer having a relatively large molecular weight described in JP-B-SHO 52-12240 or JP-A-SHO 61-7332.

The obtained polyarylene sulfide resin may be subjected to various treatments such as crosslinking/polymerization by heating in air, heat treatment in an inert gas atmosphere such as nitrogen or under reduced pressure, washing with an organic solvent, hot water, an acid aqueous solution or the like, activation with a functional group-containing compound such as an acid anhydride, an amine, an isocyanate, or a functional group-containing disulfide compound, etc.

The melt viscosity of the polyarylene sulfide resin is preferably 80 Pa·s or less, more preferably 20 Pa·s or less, under conditions of 310°C and a shear rate of 1,000/sec. Although there is no particular lower limit, it is preferably 5 Pa·s or more. Two or more polyarylene sulfide resins with different melt viscosities may be used in combination. Where, the melt viscosity can be measured using a device of Capillograph (registered trademark, supplied by Toyo Seiki Co., Ltd.) under conditions of a die length of 10 mm and a die hole diameter of 0.5 to 1.0 mm.

As the polyarylene sulfide resin, polyphenylene sulfide resins commercially available as "TORELINA" (registered trademark) supplied by Toray Industries, Inc., "DIC.PPS" (registered trademark) supplied by DIC Corporation, "DURAFIDE" (registered trademark) supplied by Polyplastics Co., Ltd., and the like can also be used.

The molding material of the present invention contains, for example, fiber-reinforced thermoplastic resin molding material (X) and fiber-reinforced thermoplastic resin molding material (Y). The fiber-reinforced thermoplastic resin molding material (X) is composed of the reinforcing fibers (A-1) and the thermoplastic resin (B-1), and the reinforcing fibers (A-1) are preferably aligned in the longitudinal direction of the fiber-reinforced thermoplastic resin molding material (X). Where, the thermoplastic resin (B-1) may be the same kind as the thermoplastic resin (B). Further, the length of the fiber-reinforced thermoplastic resin molding material (X) is preferably 3 to 15 mm, more preferably 5 to 10 mm, from the viewpoint of handleability. By making the long fiber pellets of such a length, it is possible to obtain pellets for injection molding with high versatility, and the mechanical properties of the molded article can be sufficiently enhanced by improving the flowability and handleability during injection molding and by increasing the length of the reinforcing fibers in the molded article.

Further, the reinforcing fibers (A-1) contained in the fiber-reinforced thermoplastic resin molding material (X) may be a composite in a state where a compound different from the thermoplastic resin (B) is attached. The above-described composite indicates a composite in a state where the resin is filled between respective single fibers of the reinforcing fibers (A-1), that is, a composite in a state where the reinforcing fibers (A-1) are dispersed like islands in a sea of the compound. It is desirable that the reinforcing fibers (A-1) are completely impregnated with the compound, but a certain degree of voids may exist in the composite comprising the reinforcing fibers (A-1) and the compound. The void ratio in such a composite is preferably in the range of 0 to 40%. More preferably, it is 0 to 20% or less. When the void ratio is in this range, the effect of promoting impregnation and fiber dispersion is excellent. The void ratio is measured for a part of the composite by ASTM D2734 (1997) test method. Further, the form of the coating is not particularly limited, and for example, a form in which the thermoplastic resin (B) coats a part or the entire of the outer circumference of the strand-shaped composite can be exemplified. In case of such a form, it is preferable that 50% or more of the outer circumference of the strand-shaped composite is coated, more preferably, 80% or more of the outer circumference of the strand-shaped composite is coated, and most preferably, the entire outer circumference of the strand-shaped composite is coated with the thermoplastic resin (B). By coating the composite with the thermoplastic resin (B), the handleability of the molding material is improved. As long as the composite and the thermoplastic resin (B) are bonded, there is no particular limit to the state of the boundary between the composite and the thermoplastic resin (B), but it is preferable that the thermoplastic resin (B) partially penetrates into a part of the composite near the boundary between the composite and the thermoplastic resin (B) and is in a state where it is compatible with the compound in the composite, or is in a state where it is impregnated into the reinforcing fibers (A-1). In such a state, the coated thermoplastic resin (B) is less likely to be peeled off from the composite, making it possible to obtain a molding material that is easy to handle, and the feeding during molding is stable, thereby achieving uniform plasticization and exhibiting excellent flowability.

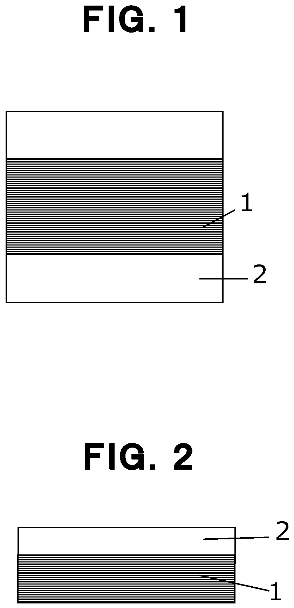

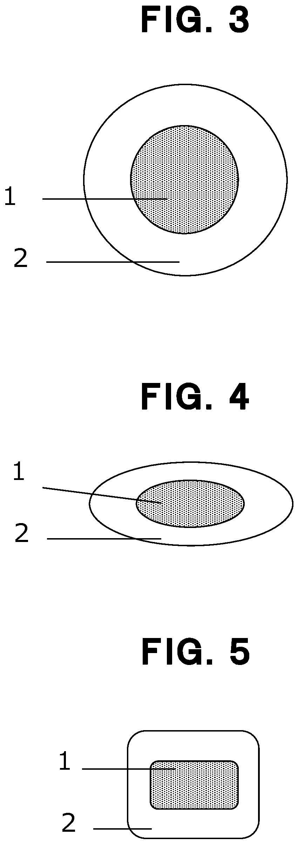

Figs. 1 and 2 are schematic diagrams showing shapes of cross sections in the axial directions of molding materials according to the present invention, and Figs. 3 to 5 are schematic diagrams showing shapes of cross sections in the directions perpendicular to axes of molding materials according to the present invention.

Although the shapes of the cross sections of the molding materials are not limited to those shown in the figures, preferably as shown in Fig. 1 showing a cross section in the axial direction, a configuration, in which reinforcing fibers (A-1) 1 serve as a core material and it is sandwiched in layers of thermoplastic resin (B) 2, is desired.

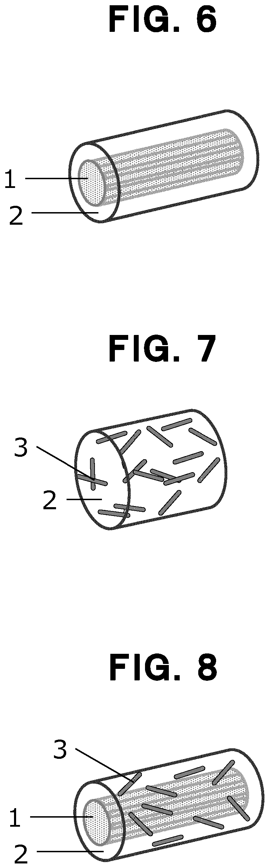

As shown in Figs. 6 and 8 illustrated as perspective views, the reinforcing fibers (A-1) 1 form a core structure, and the thermoplastic resin (B) 2 forms a sheath structure. The molding material is preferably configured to have a core-sheath structure in which the thermoplastic resin (B) covers the outer circumference of the reinforcing fibers (A-1). By making a molding material with such a structure, the reinforcing fiber bundles can be left for a long time in the molded article when the molding material is molded, and the mechanical properties, which are the effect of the present invention, can be enhanced. Furthermore, a multi-core-sheath structure in which a plurality of the reinforcing fibers (A-1) are arranged to be covered by the thermoplastic resin (B) may be employed, and in this case, the number of reinforcing fibers (A) is preferably 2 or more and 6 or less.

From the viewpoint of the handleability of the molding material, it is important that the composite and the thermoplastic resin (B) do not separate until molding is performed, and that the thermoplastic resin (B) maintains the form in which the composite is covered. Since the compound has a low molecular weight, it is often a relatively brittle solid that is easily crushed. For this reason, it is desirable to arrange the thermoplastic resin (B) so as to protect the composite, and to prevent the compound from being crushed and scattered due to the transportation of the material until molding, impact or abrasion during handling, etc.

The fiber-reinforced thermoplastic resin molding material (Y) is composed of bundled reinforcing fibers (A-2) and a thermoplastic resin (B-2). The fiber-reinforced thermoplastic resin molding material (Y) may be pelletized by melt kneading (for example, a form containing the bundled reinforcing fibers (A-2) 3 as shown in Fig. 7 or Fig. 8). Where, the thermoplastic resin (B-1) may be the same kind as the thermoplastic resin (B).

The fiber-reinforced thermoplastic resin molding materials (X) and (Y) may be dry-blended to form a molding material mixture. In this case, the content of the reinforcing fibers (A) in the molded article can be easily adjusted. Here, the dry blending indicates stirring and mixing a plurality of materials at a temperature at which the resin component does not melt, and making them into a substantially uniform state, differently from melt-kneading, and is preferably used mainly in case of using a pellet-shaped molding material, such as injection molding or extrusion molding.

The molding material of the present invention is preferably a core-sheath structure containing the reinforcing fibers (A-1), the bundled reinforcing fibers (A-2) and the thermoplastic resin (B). Concretely, the core structure of the core-sheath structure contains the reinforcing fibers (A-1), and the reinforcing fibers (A-1) are aligned in the longitudinal direction of the molding material, and the sheath structure of the core-sheath structure is preferably a fiber-reinforced resin composition (C) containing the bundled reinforcing fibers (A-2) and the thermoplastic resin (B). Furthermore, the reinforcing fibers (A-1) are preferably in a form coated with the fiber-reinforced thermoplastic resin composition (C) (for example, Fig. 8).

In the molding material of the present invention, by forming a state where the compound (E) is filled between the respective single fibers of the reinforcing fibers (A-1), the dispersion of the reinforcing fibers can be improved when the molding material is molded.

The compound (E) preferably has a lower melt viscosity than the thermoplastic resin (B). By the condition where the melt viscosity of the compound (E) is lower than that of the thermoplastic resin (B), the flowability of the compound (E) is high when molding the molding material, and the dispersion effect of the reinforcing fibers (A-1) into the thermoplastic resin (B) can be further improved. Further, the compound (E) is preferably one having a high affinity with the thermoplastic resin (B). By selecting an impregnating resin having a high affinity with the thermoplastic resin (B), because the resin is efficiently compatible with the thermoplastic resin (B) during producing and molding the molding material, the dispersibility of the reinforcing fibers can be further improved.

The compound (E) is preferably a resin selected from the group consisting of epoxy resins, phenolic resins, terpene resins and cyclic polyphenylene sulfides. By impregnating the reinforcing fibers (A-1) with the compound (E) in advance, the dispersibility of the reinforcing fibers can be improved during molding of the molding material, and therefore such a manner is preferably used.

The number average molecular weight of the compound (E) is preferably 200 to 5,000. If the number average molecular weight is 200 or more, the flexural strength and tensile strength of the molded article can be further improved. The number average molecular weight is more preferably 1,000 or more. Further, if the number average molecular weight is 5,000 or less, because the viscosity of the compound is appropriately low, the impregnation property into the reinforcing fibers (A) is excellent, and the dispersibility of the reinforcing fibers in the molded article can be further improved. The number average molecular weight is more preferably 3,000 or less. Where, the number average molecular weight of such a compound can be determined using gel permeation chromatography (GPC).

The amount of the compound (E) is preferably 0.1 to 20 parts by weight, more preferably 3 to 10 parts by weight, with respect to 100 parts by weight of the molding material. By controlling the amount within this range, a molding material excellent in moldability and handleability can be obtained.

[Resin component (D)]

In the bundled reinforcing fibers (A-2) of the present invention, it is preferred that a resin component (D) is attached to the surface of the fiber bundle.

The resin component (D) is preferably contained at an amount of 7 parts by weight or more with respect to 100 parts by weight of the bundled reinforcing fibers (A-2). If the resin component (D) is less than 7 parts by weight, the convergence of the bundled reinforcing fibers (A-2) decreases, which is undesirable because it causes an increase in fiber breakage during, for example, injection molding, resulting a decrease of mechanical properties. More preferably, the amount is 8 parts by weight or more, and further preferably, 9 parts by weight. There is no restriction for the upper limit, but the amount is preferably 20 parts by weight or less, more preferably 17 parts by weight or less, and further preferably 15 parts by weight or less.

The resin component (D) is preferably a thermosetting resin. By making the resin component (D) a thermosetting resin, because it is possible to suppress the resin component (D) from melting and decreasing the convergence property when melt-kneading or the like with the thermoplastic resin (B) or (B-2) that is a matrix resin.

< Molded article >

The fiber-reinforced resin molded article of the present invention is a molded article containing reinforcing fibers (A') and the thermoplastic resin (B), and contains 1 to 30 parts by weight of the reinforcing fibers (A') and 70 to 99 parts by weight of the thermoplastic resin (B) with respect too 100 parts by weight in total of (A') and (B).

[Reinforcing fibers contained in molded article]

The weight average fiber length Lw(A') of the reinforcing fibers (A') contained in the molded article is 0.1 to 2.9 mm. More preferably, it is 0.3 to 2.5 mm. Further preferably, it is 0.5 to 2.0 mm. By making the weight average fiber length of the reinforcing fibers (A') 0.1 mm or more, the mechanical properties of the molded article can be sufficiently exhibited. On the other hand, by making the weight average fiber length of the reinforcing fibers 2.9 mm or less, the flowability during molding can be improved, and the appearance defect of the molded article can be suppressed.

Here, the "weight average fiber length" in the present invention indicates a weight average fiber length calculated by the following equation taking into account the contribution of fiber length, instead of simply taking a number average, by applying the calculation method of the weight average molecular weight to the calculation of the fiber length. However, the following equation is applied when the fiber diameter and density of the reinforcing fibers (A') are constant.

$$\text{Weight average fiber length} = \Sigma(Mi^2 \times Ni)/\Sigma(Mi \times Ni)$$

Mi: fiber length (mm)
Ni: number of reinforcing fibers of fiber length Mi

The weight average fiber length can be determined by the following method. Using an optical microscope with a hot stage, a test piece is appropriately cut out from the molded article, and the test piece is heated at a state sandwiched between glass plates on the hot stage set at a temperature in a range of 150 to 350°C according to the melting temperature of the thermoplastic resin (B) used, and the test piece is uniformly dispersed in a film form, and it is observed, at a state where the thermoplastic resin (B) is molten, with an optical microscope (50 to 200 times). The fiber lengths of 1,000 randomly selected reinforcing fibers (A') are measured, and the weight average fiber length Lw (A') is calculated from the above-described equation. Alternatively, the test piece cut out from the molded article is put into a solvent in which the thermoplastic resin (B) is dissolved, and a heat treatment is appropriately applied to prepare a solution in which the reinforcing fibers (A') are uniformly dispersed. Thereafter, the solution is filtered, and the reinforcing fibers (A') dispersed on a filter paper are observed with an optical microscope (50 to 200 times). The fiber lengths of 1,000 randomly selected reinforcing fibers (A') are measured, and the weight average fiber length Lw (A') is calculated from the above-described equation. As the filter paper used at that time, a quantitative filter paper (model number: No. 5C) supplied by Advantec Japan Co., Ltd. and the like can be exemplified.

The kind of the reinforcing fibers (A') is not particularly restricted the reinforcing fibers described in the explanation of the reinforcing fibers (A) of the molding material can be exemplified. Further, the preferred kinds and combinations of the reinforcing fibers are also the same, and the reasons for their preference are also the same.

The amount of the reinforcing fibers (A') is preferably 1 to 30 parts by weight with respect to 100 parts by weight of the (A) and (B), and more preferably 5 to 25 parts by weight. If the amount of the reinforcing fibers is less than 1 part by weight, the mechanical properties of the resulting molded article may be insufficient, and if it exceeds 30 parts by weight, the appearance of the molded article may be inferior.

Further, the reinforcing fibers (A') preferably contains bundled reinforcing fibers (A-2') formed from 10 or more single fibers having a length of 0.5 to 2.9 mm. The effect of containing the bundled reinforcing fibers (A-2') is the same as that described in the explanation of the bundled reinforcing fibers (A-2) of the molding material.

By making the weight average fiber length of the bundled reinforcing fibers (A-2') 0.5 mm or more, the mechanical properties of the molded article can be sufficiently exhibited. On the other hand, by making the weight average fiber length of the bundled reinforcing fibers (A-2') 2.9 mm or less, the flowability during molding can be improved, and the appearance defect of the molded article can be suppressed. More preferably, it is 0.3 to 2.5 mm. Further preferably, it is 0.5 to 2.0 mm.

In the reinforcing fibers (A') of the present invention, it is preferred that a ratio of reinforcing fibers having a fiber length of 0.3 to 1.0 mm is 40% or more. The fiber length ratio of the reinforcing fibers (A') can be calculated from the distribution obtained by measuring 400 reinforcing fibers (A') taken out of the molded article. By making the ratio of reinforcing fibers having a fiber length of 0.3 to 1.0 mm 40% or more, because the fiber length of the reinforcing fibers (A') contained in the molded article can be increased, the mechanical properties and dimensional stability of the molded article are excellent.

The molded article of the present invention preferably contains 1 to 50 parts by weight of the bundled reinforcing fibers (A-2') with respect to 100 parts by weight of the reinforcing fibers (A'). If the content of the bundled reinforcing fibers (A-2') is less than 1 part by weight, the mechanical properties and dimensional accuracy of the molded article are deteriorated, which is not preferable. If the content of the bundled reinforcing fibers (A-2') is more than 50 parts by weight, the mechanical properties are deteriorated, which is not preferable.

The molded article of the present invention is a fiber-reinforced thermoplastic resin molded article excellent in mechanical properties and dimensional accuracy, and as the application of the molded article comprising the molding material of the present invention, it is extremely useful for electrical and electronic equipment, home appliances, automotive parts, and parts for sports applications. As the electrical and electronic equipment parts, it is suitable for housings for televisions, video players, DVD players, cameras and audio equipment, and electronic component applications typically exemplified by connectors, speakers, microphones, headphones, small motors, computer-related parts, etc. As the home appliances, exemplified are VTR parts, television parts, irons, hair dryers, rice cooker parts, microwave oven parts, audio parts, audiovisual equipment parts such as laser discs (registered trademark), compact discs and DVDs, lighting parts, refrigerator parts, air conditioner parts, typewriter parts, word processor parts, and the like. Further, as the optical equipment and precision machinery-related parts, exemplified are office computer-related parts, telephone-related parts, facsimile-related parts, copier-related parts, binoculars, cameras, watches and the like. As the automotive parts and vehicle-related parts, exemplified are door pads, pillars, console boxes, various motor housings, roof rails, fenders, garnishes, bumpers, door panels, roof panels, hood panels, trunk lids, door mirror stays, spoilers, hood louvers, wheel covers, wheel caps, grill apron cover frames, lamp bezels, door handles, door garnish moldings, rear finishers, wipers, etc. Further, the composition in the present invention is also suitable as sporting goods, and is suitably used for golf-related goods such as golf clubs, shafts, grips and golf balls, racket sports-related goods such as tennis rackets, tennis balls, badminton rackets and their strings, and badminton shuttlecocks, sports body protection goods such as masks, helmets, bibs, elbow pads, and knee pads for American football, baseball, softball, and the like, shoe-related goods such as soles for sports shoes, fishing tackle-related goods such as fishing rods, reels and lures, summer sports-related goods such as surfing, winter sports-related goods such as skiing and snowboarding, and other indoor and outdoor sports-related goods.

Examples

The present invention will be explained in more detail with reference to the following examples, but the present invention is not limited to the descriptions of these examples. First, the methods for evaluating various properties used in the examples will be explained.

(1) Weight average fiber length:

A test piece cut out from the molded article was placed in a solvent in which the thermoplastic resin (B) used in each Example and Comparative Example was dissolved, and a heat treatment was appropriately applied to obtain a solution in which the reinforcing fibers (A) were uniformly dispersed. Thereafter, the solution was filtered using a quantitative filter paper supplied by Advantec Japan Co., Ltd. (No. 5C), and the reinforcing fibers (A) dispersed on the filter paper were observed with an optical microscope (50 to 200 times). The fiber lengths of 1,000 randomly selected reinforcing fibers (A) were measured, and the weight average fiber length (Lw) was calculated from the following equation.

$$\text{Average fiber length} = \Sigma(Mi^2 \times Ni)/\Sigma(Mi \times Ni)$$

Mi: fiber length (mm)
Ni: Number of fibers with fiber length Mi

(2) Determination of Charpy impact strength of molded article:

A parallel portion was cut out from each of the ISO dumbbell test pieces obtained in respective Examples and Comparative Examples, and a V-notched Charpy impact test was carried out in accordance with ISO179 using a C1-4-01 tester supplied by Tokyo Test Instruments Co., Ltd., to calculate the impact strength ($kJ/cm^2$).

(3) Determination of flexural modulus of molded article:

The ISO dumbbell test pieces obtained by injection molding the molding material were subjected to flexural property determination according to ISO178 (1993). The flexural modulus was determined using a three-point bending test jig (indenter radius 5 mm) with a distance between fulcrums set to 64 mm at test condition of a test speed of 2 mm/min. As the test machine, an "Instron (registered trademark)" universal testing machine Model 5566 (supplied by Instron Corporation) was used.

(4) Dimensional evaluation of molded article (evaluation of warping amount):

For the test pieces of 80 mm x 80 mm x 1 mm thickness obtained in each Example and Comparative Example, the difference (t2-t1) between the height (t1) of the center of the test piece when viewed from the side and the height (t2) of the end part when viewed from the side was evaluated. The measurements were performed three times for each test piece, and the average value thereof was used for the evaluation of each Example and Comparative Example. Evaluation was performed according to the following criteria, with A and B being determined to be acceptable.

A: (t2-t1) = less than 3 mm
B: (t2-t1) = less than 5 mm
C: (t2-t1) = 5mm or more

(5) Evaluation of flowability (spiral flow length):

The flow length was measured when the molding material was molded by an injection molding machine using a mold with a width of 10 mm and a thickness of 2 mm at the conditions of temperature shown in Examples, an injection speed of 100 mm/sec, and an injection pressure of 80 MPa. The flow length was determined as an average value of 20 shots. The average value was used to evaluate each Example and Comparative Example. The evaluation was performed according to the following criteria, with A and B being determined to be acceptable.

A: 100 mm or more
B: 50 mm or more
C: less than 50 mm

Reference Example 1:

Preparation of reinforcing fibers (A-1) (carbon fibers (A-1)):

A copolymer mainly composed of polyacrylonitrile was spun, calcined and surface-oxidized to obtain continuous carbon fibers having a total number of single fibers of 24,000, a single fiber diameter of 7 μm, a mass per unit length of 1.6 g/m, a specific gravity of 1.8 $g/cm^3$ and a surface oxygen concentration ratio [O/C] of 0.2. The strand tensile strength of the continuous carbon fibers was 4,880 MPa, and the strand tensile modulus was 225 GPa. Next, a sizing agent mother liquid was prepared by dissolving glycerol polyglycidyl ether as a polyfunctional compound in water to a concentration of 2% by weight, and the sizing agent was applied to the carbon fibers by immersion method, followed by drying at 230°C. The amount of sizing agent attached to the carbon fibers thus obtained was 1.0% by weight.

Reference Example 2:

Preparation of bundled reinforcing fibers (A-2)-(1):

200g of crushed and classified waste CFRP (CFRP: carbon fiber-reinforced plastic) pieces were spread uniformly on a metal bat and placed in an electric muffle furnace with an internal volume of 59 liters, while introducing nitrogen gas into the furnace, the treatment temperature was kept at a predetermined temperature (400°C) and heat-treated for a treatment time of 1 hour. Thereafter, similarly, while introducing air into the furnace, the treatment temperature was kept at a predetermined temperature (300°C) and heat-treated for a treatment time of 1 hour to obtain recycled carbon fiber chopped yarn. When the obtained resin component (D) was measured, 10 parts by weight of the thermosetting resin was attached.

Reference Example 3:

Preparation of bundled reinforcing fibers (A-2)-(2):

200g of the crushed and classified waste CFRP pieces were spread uniformly on a metal bat and placed in an electric muffle furnace with an internal volume of 59 liters. While introducing nitrogen gas into the furnace, the treatment temperature was kept at a predetermined temperature (500°C) and heat-treated for a treatment time of 2 hours. Thereafter, similarly, while introducing air into the furnace, the treatment temperature was kept at a predetermined temperature (300°C) and heat-treated for a treatment time of 2 hours to obtain recycled carbon fiber chopped yarn. When the obtained resin component (D) was measured, 5 parts by weight of the thermosetting resin was attached.

Reference Example 4:

Preparation of polyphenylene sulfide (B-2):

20-liter autoclave equipped with a stirrer was charged with 2,383 g ( 20.0 mol) of a 47% by mass aqueous solution of sodium hydrosulfide, 848g (20.4 mol) of sodium hydroxide (purity: 96% by mass), 3,271g (33 mol) of N-methyl-2-pyrrolidone (NMP), 541 g (6.6 mol) of sodium acetate, and 3,000 g of ion-exchanged water, and gradually heated up to 225°C for about 3 hours while passing nitrogen through at normal pressure, and 4,200 g of water and 80g of NMP were distilled out, and then the reaction vessel was cooled down to 150°C. The amount of hydrogen sulfide scattered per 1 mole of sodium hydrosulfide charged was 0.018 mol. Next, 2,940g (20 mol) of p-dichlorobenzene (p-DCB) and 2,620g (26.2 mol) of NMP were added, the reaction vessel was sealed under nitrogen gas, and the temperature was elevated up to 227°C at a rate of 0.8°C/min while stirring at 400 rpm, and then the temperature was elevated up to 270°C at a rate of 0.6°C/min and held at 270°C for 170 minutes. Thereafter, the mixture was cooled down to 180°C at a rate of 0.4°C/min, and then rapidly cooled down to near room temperature. The contents were taken out and diluted with 10 liters of NMP, after the solvent and solids were filtered off with a sieve (80 mesh), and the obtained particles were washed several times with 20 liters of warm water and filtered off to obtain polyphenylene sulfide (B-1). This was dried with hot air at 80°C and dried under reduced pressure at 120°C.

<Bundled reinforcing fibers (A-2)>

(Carbon fibers (A-2) - (3))

Carbon fiber "TORAYCA" cut fiber TV14-006 (supplied by Toray Industries, Inc.) was used.

<Thermoplastic resin (B)>

(B-1) A polycarbonate resin (supplied by Teijin Chemical Co., Ltd., "Panlite" (registered trademark) L-1225L) was used.
(B-2) The polyphenylene sulfide resin prepared in Reference Example 4 was used.
(B-3) A pellet blend of polypropylene resin ("Prime Polypro" (registered trademark) J137 supplied by Prime Polymer Co., Ltd.) and maleic acid modified polypropylene resin ("Admer" (registered trademark) QE840 supplied by Mitsui Chemicals, Inc.) in a weight ratio of 85/15 was used.
(B-4) Polyamide 610 resin (nylon 610 resin "Amilan" (registered trademark) CM2001) was used.

<Compound (E)>

(E-1) An epoxy resin ("jER" 828, supplied by Mitsubishi Chemical Corporation) was used.

(E-2) A terpene-based resin ("Clearon M105" supplied by Yasuhara Chemical Co., Ltd.) was used.

(E-3) A terpene phenol resin ("YS Polystar N125" supplied by Yasuhara Chemical Co., Ltd.) was used.

(Example 1)

Using a long fiber-reinforced resin pellet manufacturing apparatus in which a coating die for the electric wire resin coating method was installed at the tip of a TEX-30α type twin screw extruder (screw diameter: 30 mm, L/D = 32) supplied by The Japan Steel Works, Ltd., the extruder cylinder temperature was set at 230°C, and the polycarbonate resin (B-1) shown above was fed from its main hopper and melt-kneaded at a screw rotational speed of 200 rpm. The discharge amount of the compound (E-1) heated and melted at 250°C was controlled so as to become 6 parts by mass with respect to 100 parts by mass of the total of (A) and (B). Thereafter, (E-1) was discharged and impregnated into the fiber bundles comprising carbon fibers (A-1), and then the fiber bundles of carbon fibers (A-1) to which the compound (E-1) was applied were supplied to a die port (diameter: 3 mm) for discharging molten polycarbonate resin (B-1), and the carbon fibers (A-1) were continuously arranged so that the outer circumference of the carbon fibers (A-1) was covered with the polycarbonate resin (B-1). At this time, the inner cross section of the fiber bundle was in a state such that at least a part of the carbon fibers (A-1) were in contact with the polycarbonate resin (B-1). After cooling the obtained strand, it was cut with a cutter at a pellet length of 7 mm to prepare fiber-reinforced thermoplastic resin molding material (X). At this time, the take-up speed was adjusted so that the carbon fibers (A-1) were 30 parts by mass with respect to the total of 100 parts by mass of (A-1) and (B-1). The length of the carbon fibers (A-1) in the obtained fiber-reinforced thermoplastic resin molding material (X) was substantially the same as the length of the pellet, and the carbon fiber bundles were arranged parallel to the axial direction of the molding material.

Next, after feeding the thermoplastic resin (B-1) to the main hopper of another twin-screw extruder (TEX30α supplied by The Japan Steel Works, Ltd.), the bundled reinforcing fibers (A-2)-(1) were fed from the side feeder into the molten resin, and the screw rotational speed was set at 200 rpm. The strand discharged from the die was cooled in water, cut at a length of 3.0 mm with a strand cutter, and pelletized to obtain fiber-reinforced thermoplastic resin molding material (Y-1) pellets. At this time, the amount of bundled reinforcing fibers (A-2)-(1) charged was controlled so that the bundled reinforcing fibers (A-2)-(1) was 30 parts by mass with respect to the total of 100 parts by mass of (A-2) and (B-1). Similarly, fiber-reinforced thermoplastic resin molding material (Y-2) pellets were obtained in which the bundled reinforcing fibers (A-2)-(1) was 10 parts by mass with respect to the total of 100 parts by mass of (A-2) and (B-1), and fiber-reinforced thermoplastic resin molding material (Y-3) pellets were obtained in which the bundled reinforcing fibers (A-2)-(1) was 5 parts by mass with respect to the total of 100 parts by mass of (A-2) and (B-1).

The fiber-reinforced thermoplastic resin molding material (X) and (Y-1) thus obtained were dry-blended at the ratio shown in Table 1 to prepare a mixture becoming an intermediate raw material, and by injection molding it using an injection molding machine (The Japan Steel Works, Ltd. J110AD) at conditions of injection time: 2 seconds, back pressure: 5 MPa, holding pressure: 40 MPa, pressure holding time: 10 seconds, cylinder temperature: 260°C, and mold temperature: 80°C, an ISO-type dumbbell test piece as a molded article was prepared as one of 80 mm x 80 mm x 1 mm thick for warping evaluation and the spiral flow length was measured. The composition ratios of (A-1), (A-2), (B) and compound (E) in Table 1 were controlled by the ratio of the dry blend. Here, the cylinder temperature indicates a temperature of the part of the injection molding machine where the molding material is heated and melted, and the mold temperature indicates a temperature of the mold into which the resin is injected to form a predetermined shape. The obtained test piece (molded article) was stationarily placed for 24 hours in a constant temperature and humidity room adjusted to a temperature of 23°C and a relative humidity of 50%, and then subjected to evaluation of the properties. The evaluation results evaluated by the aforementioned methods are summarized in Table 1.

(Examples 2 to 5, 11 and 12, Comparative Examples 1 to 4)

Molding materials and molded article pieces were obtained in the same manner as in Example 1 described above, other than conditions where the ratios of respective components were set as shown in Tables 1 and 2.

(Example 6)

A molding material and a test piece were obtained in the same manner as in Example 1 described above, other than a condition where the screw rotational speed of the twin-screw extruder was set at 500 rpm when preparing the fiber-reinforced thermoplastic resin molding material (Y). The evaluation results are summarized in Table 1.

(Example 7)

A molded article was prepared and evaluated in the same manner as in Example 1, other than conditions where the composition ratios or the resin and compound kinds used were changed as shown in Table 1, and the cylinder temperature was set at 320°C and the mold temperature was set at 130°C. The evaluation results are summarized in Table 1.

(Example 8)

A molded article was prepared and evaluated in the same manner as in Example 1, other than conditions where the composition ratios or the resin or compound kinds used were changed as shown in Table 1, and the cylinder temperature was set at 220°C and the mold temperature was set at 60°C. The evaluation results are summarized in Table 1.

(Example 9)

A molded article was prepared and evaluated in the same manner as in Example 1, other than conditions where the composition ratios or the resin and compound kinds used were changed as shown in Table 1, and the cylinder temperature was set at 270°C and the mold temperature was set at 60°C. The evaluation results are summarized in Table 1.

(Example 10)

Using a long fiber-reinforced resin pellet manufacturing apparatus in which a coating die for the electric wire resin coating method was installed at the tip of a TEX-30α type twin screw extruder (screw diameter: 30 mm, L/D = 32) supplied by The Japan Steel Works, Ltd., the extruder cylinder temperature was set at 230°C, and the bundled reinforcing fibers (A-2) - (1) and polycarbonate resin (B-1) shown above were fed together from the main hopper and melt-kneaded at a screw rotational speed of 200 rpm to prepare a fiber-reinforced resin composition (C-1). The discharged amount of the compound (E -1) heated and melted at 250°C was controlled so as to become 6 parts by mass with respect to the total of 100 parts by mass of (A) and (B). Thereafter, (E -1) was discharged, and impregnated into the fiber bundles comprising the carbon fibers (A-1), and then the fiber bundles of carbon fibers (A-1) to which the compound (E-1) was applied were supplied to a die port (diameter: 3 mm) from which the molten fiber-reinforced resin composition (C-1) was discharged, and the fiber-reinforced resin composition (C-1) was continuously arranged so that the outer circumference of the carbon fibers (A-1) was covered with the fiber-reinforced resin composition (C-1). At this time, the inner cross section of the fiber bundle was in a state such that at least a part of the carbon fibers (A-1) were in contact with the fiber-reinforced resin composition (C-1). After cooling the obtained strand, it was cut with a cutter at a pellet length of 7 mm to obtain composite-type long fiber pellets. At this time, the charge amount and take-up speed of the bundled reinforcing fibers (A-2) - (1) were adjusted so that the amount of the carbon fibers (A-1) became 20 parts by mass and the carbon fibers (A-2) became 10 parts by weight with respect to the total of 100 parts by mass of (A-1) and (B-1). The length of the carbon fibers (A-1) in the obtained composite-type long fiber pellets was substantially the same as the pellet length, and the carbon fiber bundles were arranged parallel to the axial direction of the molding material. Except for those, a molded article was prepared in the same manner as in Example 1 and evaluated. The evaluation results are summarized in Table 1.

Examples 1 to 6, 11, and 12 were excellent in mechanical properties, dimensional accuracy and flowability. Examples 7 to 9 were similarly excellent in mechanical properties, dimensional accuracy and flowability even when the resin kind and compound kind were changed. Example 10 was similarly excellent in mechanical properties, dimensional accuracy and flowability even when made into composite-type long fiber pellets.

On the other hand, in Comparative Example 1, since the bundled reinforcing fibers (A-2) were not contained, the flowability was poor. In Comparative Example 2, since the reinforcing fiber bundles (A-1) were not contained, the impact strength of the molded article was poor. In Comparative Example 3, since the amount of the resin component (D) attached to the bundled reinforcing fiber bundles (A-2) was small, the fibers did not form a bundle in the molded article, the mechanical properties and dimensional accuracy of the molded article were poor, and further, since the fibers were dispersed at a state of single fibers, the fiber contact during injection molding increased, and the resin flow was hindered, the flowability was also poor. In Comparative Example 4, since general chopped yarns were used, they did not form a bundle in the molded article, the mechanical properties and dimensional accuracy of the molded article were poor, and further, since they were dispersed at a state of single fibers, the fiber contact during injection molding increased, and the resin flow was hindered, the flowability was also poor.

[Table 1]

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Raw material | Fiber-reinforced thermoplastic resin molding material (X) | Parts by weight | 67.0 | 97.0 | 83.0 | 50.0 | 17.0 | 67.0 | 67.0 | 67.0 | 67.0 | — | 33 | 23 |
| | Fiber-reinforced thermoplastic resin molding material (Y) | Kind | (Y-1) | (Y-1) | (Y-1) | (Y-1) | (Y-1) | (Y-1) | (Y-1) | (Y-1) | (Y-1) | — | (Y-2) | (Y-3) |
| | | Parts by weight | 33.0 | 3.0 | 17.0 | 50.0 | 83.0 | 33.0 | 33.0 | 33.0 | 33.0 | — | 67 | 77 |
| | Reinforcing fiber (A-1) | Kind | (A-1) | (A-1) | (A-1) | (A-1) | (A-1) | (A-1) | (A-1) | (A-1) | (A-1) | (A-1) | (A-1) | (A-1) |
| | | Parts by weight | 20.0 | 29.0 | 25.0 | 15.0 | 5.0 | 20.0 | 20.0 | 20.0 | 20.0 | 20.0 | 10 | 7 |
| | Bundled reinforcing fiber (A-2) | Kind | (A-2)-(1) | (A-2)-(1) | (A-2)-(1) | (A-2)-(1) | (A-2)-(1) | (A-2)-(1) | (A-2)-(1) | (A-2)-(1) | (A-2)-(1) | (A-2)-(1) | (A-2)-(1) | (A-2)-(1) |
| | | Parts by weight | 10.0 | 1.0 | 5.0 | 15.0 | 25.0 | 10.0 | 10.0 | 10.0 | 10.0 | 10.0 | 6.7 | 3.9 |
| | Thermoplastic resin (B) | Kind | (B-1) | (B-1) | (B-1) | (B-1) | (B-1) | (B-1) | (B-2) | (B-3) | (B-4) | (B-1) | (B-1) | (B-1) |
| | | Parts by weight | 70.0 | 70.0 | 70.0 | 70.0 | 70.0 | 70.0 | 70.0 | 70.0 | 70.0 | 70.0 | 83.3 | 89.1 |
| | Compound (E) | Kind | (E-1) | (E-1) | (E-1) | (E-1) | (E-1) | (E-1) | (E-1) | (E-2) | (E-3) | (E-1) | (E-1) | (E-1) |
| | | Content | 6.0 | 8.7 | 7.5 | 4.5 | 1.3 | 6.0 | 6.0 | 6.0 | 6.0 | 6.0 | 3.0 | 2.1 |
| Molding material | Reinforcing fiber (A) | Length (mm) | 7.0 | 7.0 | 7.0 | 7.0 | 7.0 | 7.0 | 7.0 | 7.0 | 7.0 | 7.0 | 7.0 | 7.0 |
| | | Form | Bundle | Bundle | Bundle | Bundle | Bundle | Bundle | Bundle | Bundle | Bundle | Bundle | Bundle | Bundle |
| | Bundled reinforcing fiber (A-2) | Length (mm) | 2.5 | 2.5 | 2.5 | 2.5 | 0.5 | 0.5 | 2.5 | 2.5 | 2.5 | 1.0 | 2.5 | 2.5 |
| | | Form | Bundle | Bundle | Bundle | Bundle | Bundle | Bundle | Bundle | Bundle | Bundle | Bundle | Bundle | Bundle |
| | Material formation (coating/blend) | | Blend | Blend | Blend | Blend | Blend | Blend | Blend | Blend | Blend | Coating | Blend | Blend |
| | Resin component (B) | Parts by weight | 10.0 | 10.0 | 10.0 | 10.0 | 8.0 | 10.0 | 10.0 | 10.0 | 10.0 | 10.0 | 10.0 | 10.0 |
| | | Amount of attachment | | | | | | | | | | | | |
| | — | — | Thermosetting | Thermosetting | Thermosetting | Thermosetting | Thermosetting | Thermosetting | Thermosetting | Thermosetting | Thermosetting | Thermosetting | Thermosetting | Thermosetting |
| Evaluation result of molded article | Fiber length LwA' in molded article | mm | 1.0 | 0.7 | 0.7 | 1.0 | 0.6 | 1.0 | 1.0 | 1.0 | 1.0 | 0.8 | 1.1 | 1.1 |
| | Flexural modulus | GPa | 22.0 | 25.0 | 24.0 | 22.0 | 19.0 | 19.0 | 25.0 | 17.0 | 20.0 | 21.0 | 14.0 | 11.0 |
| | Charpy impact strength with notch | kJ/m$^2$ | 15.0 | 19.0 | 17.0 | 12.0 | 7.0 | 10.0 | 10.0 | 10.0 | 16.0 | 13.0 | 12.0 | 10.0 |
| | Warping | — | A | A | A | B | B | B | A | A | A | A | B | B |
| | Flowability | — | A | B | B | A | B | A | A | A | A | A | A | A |

[Table 2]

| | | | Comparative Example 1 | Comparative Example 2 | Comparative Example 3 | Comparative Example 4 |
|---|---|---|---|---|---|---|
| Raw material | Fiber-reinforced thermoplastic resin molding material (X) | Parts by weight | 100.0 | 0.0 | 67.0 | 67.0 |
| | Fiber-reinforced thermoplastic resin molding material (Y) | Kind | (Y-1) | (Y-1) | (Y-1) | (Y-1) |
| | | Parts by weight | 0.0 | 100.0 | 33.0 | 33.0 |
| | Reinforcing fiber (A-1) | Kind | (A-1) | — | (A-1) | (A-1) |
| | | Parts by weight | 30.0 | 0.0 | 20.0 | 20.0 |
| | Bundled reinforcing fiber (A-2) | Kind | — | (A-2)-(1) | (A-2)-(2) | (A-2)-(3) |
| | | Parts by weight | 0.0 | 30.0 | 10.0 | 10.0 |
| | Thermoplastic resin (B) | Kind | (B-1) | (B-1) | (B-1) | (B-1) |
| | | Parts by weight | 70.0 | 70.0 | 70.0 | 70.0 |
| | Compound (E) | Kind | (E-1) | (E-1) | (E-1) | (E-1) |
| | | Content | 7.5 | 0.0 | 5.0 | 5.0 |
| Molding material | Reinforcing fiber (A) | Length (mm) | 7.0 | — | 7.0 | 7.0 |
| | | Form | Bundle | — | Bundle | Bundle |
| | Bundled reinforcing fiber (A-2) | Length (mm) | — | 2.5 | 0.4 | 0.2 |
| | | Form | — | Bundle | Single fiber | Single fiber |
| | Material formation (coating/blend) | — | — | — | Blend | Blend |
| | Resin component (D) | Parts by weight | — | 8.0 | 5.0 | — |
| | | Amount of attachment | — | Thermosetting | Thermosetting | — |
| Evaluation result of molded article | Fiber length LwA' in molded article | mm | 1.1 | — | 1.0 | 0.2 |
| | Flexural modulus | GPa | 23.0 | 24.0 | 15.0 | 15.0 |
| | Charpy impact strength with notch | kJ/m² | 13.0 | 5.0 | 6.0 | 6.0 |
| | Warping | — | A | C | C | C |
| | Flowability | — | C | A | C | C |

Explanation of symbols

1: reinforcing fibers (A-1)
2: thermoplastic resin (B)
3: bundled reinforcing fibers (A-2)

**Claims**

1. A fiber-reinforced resin molding material comprising reinforcing fibers (A) and a thermoplastic resin (B), wherein the fiber-reinforced resin molding material contains 1 to 30 parts by weight of the reinforcing fibers (A) and 70 to 99 parts by weight of the thermoplastic resin (B) with respect to 100 parts by weight in total of (A) and (B), the reinforcing fibers (A) comprise reinforcing fibers (A-1) and bundled reinforcing fibers (A-2), the reinforcing fibers (A-1) have a length of 3 to 15 mm and are aligned in the longitudinal direction of the molding material, the length of the reinforcing fibers (A-1) is the same as a length in the longitudinal direction of the molding material, and the bundled reinforcing fibers (A-2) are configured from 10 or more single fibers having a length of 0.5 to 2.9 mm.

2. The fiber-reinforced resin molding material according to claim 1, wherein the fiber-reinforced resin molding material comprises a fiber-reinforced resin molding material (X) and a fiber-reinforced resin molding material (Y), the fiber-reinforced resin molding material (X) contains the reinforcing fibers (A-1) and a thermoplastic resin (B-1), the reinforcing fibers (A-1) are aligned in the longitudinal direction of the fiber-reinforced resin molding material (X), and the fiber-reinforced resin molding material (Y) comprises the bundled reinforcing fiber (A-2) and a thermoplastic resin (B-2).

3. The fiber-reinforced resin molding material according to claim 1, wherein the fiber-reinforced resin molding material has a core-sheath structure, the core structure of the core-sheath structure contains the reinforcing fibers (A-1), and the reinforcing fibers (A-1) are aligned in the longitudinal direction of the molding material, the sheath structure of the core-sheath structure is a fiber-reinforced resin composition (C) containing the bundled reinforcing fibers (A-2) and the thermoplastic resin (B), the sheath structure coats the core structure.

4. The fiber-reinforced resin molding material according to claim 1, wherein the reinforcing fibers (A-1) and the bundled reinforcing fibers (A-2) are both carbon fibers.

5. The fiber-reinforced resin molding material according to claim 2, wherein content of the reinforcing fibers (A-1) is 50 to 99 parts by weight and content of the bundled reinforcing fiber (A-2) is 1 to 50 parts by weight with respect to 100 parts by weight of the reinforcing fibers (A).

6. The fiber-reinforced resin molding material according to any of claims 1 to 5, wherein a resin component (D) is attached to a fiber bundle surface of the bundled reinforcing fibers (A-2).

7. The fiber-reinforced resin molding material according to claim 6, wherein the resin component (D) is a thermosetting resin and is contained at an amount of 7 parts by weight or more with respect to 100 parts by weight of the bundled reinforcing fibers (A-2).

8. The fiber-reinforced resin molding material according to claim 1, wherein the thermoplastic resin (B) comprises at least one selected from the group consisting of polyamide resin, polycarbonate resin, polyphenylene sulfide resin, and polypropylene resin.

9. A fiber-reinforced resin molded article comprising reinforcing fibers (A') and a thermoplastic resin (B), wherein the fiber-reinforced resin molded article contains 1 to 30 parts by weight of the reinforcing fiber (A') and 70 to 99 parts by weight of the thermoplastic resin (B) with respect to 100 parts by weight in total of (A') and (B), a weight average fiber length Lw(A') of the reinforcing fibers (A') is 0.1 to 2.9 mm, and the reinforcing fibers (A') contain bundled reinforcing fibers (A-2') configured from 10 or more single fibers having a length of 0.5 to 2.9 mm.

10. The fiber-reinforced resin molded article according to claim 9, wherein a ratio of reinforcing fibers having a fiber length of 0.3 to 1.0 mm in the reinforcing fibers (A') is 40% or more.

11. The fiber-reinforced resin molded article according to claim 10, wherein the bundled reinforcing fibers (A-2') are contained at an amount of 1 to 50 parts by weight with respect to 100 parts by weight of the reinforcing fibers (A').

12. The fiber-reinforced resin molded article according to claim 9, wherein the reinforcing fibers (A') are carbon fibers.

13. The fiber-reinforced resin molded article according to any of claims 9 to 12, wherein a resin component (D) is attached to a fiber bundle surface of the bundled reinforcing fibers (A-2').

14. The fiber-reinforced resin molded article according to claim 13, wherein the resin component (D) is a thermosetting resin and is contained at an amount of 7 parts by weight or more with respect to 100 parts by weight of the bundled reinforcing fibers (A-2').

15. The fiber-reinforced resin molded article according to any of claims 9 to 12, wherein the thermoplastic resin (B) comprises at least one selected from the group consisting of polyamide resin, polycarbonate resin, polyphenylene sulfide resin, and polypropylene resin.

# FIG. 1

1

2

# FIG. 2

2

1

# FIG. 3

1

2

# FIG. 4

1

2

# FIG. 5

1

2

# FIG. 6

# FIG. 7

# FIG. 8

<table>
<tr><td colspan="2" align="center"><strong>INTERNATIONAL SEARCH REPORT</strong></td><td colspan="2">International application No.<br><br><strong>PCT/JP2023/022694</strong></td></tr>
</table>

| A. | CLASSIFICATION OF SUBJECT MATTER |
|---|---|

*C08J 5/04*(2006.01)i; *D02G 3/16*(2006.01)i; *D02G 3/36*(2006.01)i
FI:  C08J5/04; D02G3/16; D02G3/36

According to International Patent Classification (IPC) or to both national classification and IPC

| B. | FIELDS SEARCHED |
|---|---|

Minimum documentation searched (classification system followed by classification symbols)

C08J5/04; D02G3/16; D02G3/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2019/235299 A1 (TORAY INDUSTRIES, INC.) 12 December 2019 (2019-12-12)<br>entire text | 1-15 |
| A | JP 2017-2125 A (TORAY INDUSTRIES, INC.) 05 January 2017 (2017-01-05)<br>entire text | 1-15 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/022694**

| Patent document cited in search report | | | Publication date (day/month/year) | Patent family member(s) | | | Publication date (day/month/year) |
|---|---|---|---|---|---|---|---|
| WO | 2019/235299 | A1 | 12 December 2019 | US | 2021/0162638 | A1 | |
| | | | | entire text | | | |
| JP | 2017-2125 | A | 05 January 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006181776 A
- JP 2012116917 A
- JP HEI4175108 A
- JP 2002129027 A
- JP SHO453368 B
- JP SHO5212240 B
- JP SHO617332 A